# EUROPEAN PATENT SPECIFICATION

(11) **EP 3 079 029 B1**
(45) Date of publication and mention of the grant of the patent: **08.07.2020**
(21) Application number: 15305523.1
(22) Date of filing: 09.04.2015
(51) Int. Cl.: G05B 23/02

(54) **METHOD FOR REMOTE NOTIFICATION OF USER INFORMATION OF A BUILDING MANAGEMENT SYSTEM**
VERFAHREN ZUR FERNMITTEILUNG VON BENUTZER-INFORMATIONEN IN EINEM GEBÄUDELEITSYSTEM
PROCÉDÉ DE NOTIFICATION A DISTANCE DES INFORMATIONS DE UTILISATEUR DANS UN SYSTEME DE GESTION DU BATIMENT

(43) Date of publication of application: 12.10.2016
(73) Proprietor: Newron System, 31100 Toulouse (FR)
(72) Inventor: Le Men, Serge, 31170 TOURNEFEUILLE (FR); Mayis, Francois, 31770 COLOMIERS (FR)
(74) Representative: Casalonga

(56) References cited:
- US-A1- 2011 248 857
- US-A1- 2013 134 962
- US-A1- 2014 025 321

## Description

The invention relates to a method for remote notification of user information, e.g. of alarms and/or events, to a building maintainer or a maintenance community to share technical information, energy consumption, provided by a home or building management system of a building or part of a building, which manages this information. The invention could also be used in SCADA (Supervisory Control and Data Acquisition) systems for buildings or in management software tools used in operational and/or maintenance modes of building management systems and home automation systems.

In current building management systems, alarms and events are mainly managed in local supervision software tools, SCADA- Systems or simple visualizations. An example is an alarm when a technical problem occurs on an automation device or when the carbon dioxide, carbon monoxide level is too high in the building, an event such as the information when energy consumption is too high compared to a forecast, an event such as somebody illegally entering in the building. These local supervision tools make it possible to set alarm and events conditions. If the alarm and events occur locally, a popup window raises locally to warn the users.

These alarms and events have to be locally managed by users but the alarms and events can be ignored, acknowledged or deleted by the users. It is also possible to trace a value, information and person who managed that alarm and event. Sometimes it is necessary to remotely manage the alarms and events, meaning to give the possibility to get the alarm and event set, the value and/or the type. It makes it possible optionally also to acknowledge the alarm and event, store or delete it in a remote way. Currently this information is sent by a protected message, mail or SMS/MMS by a physical telephone, a modem connection or an internet / intranet connection.

The alarm and event information is generally forwarded via LAN or WAN through firewalls, proxies, VPNs, using modem or regular IT intranet infrastructure for example to users in Active Directory Groups, to geographically different networks, to desk-tops running Mac OS X, Windows or Linux systems, to mobile devices, to email in-boxes via SMTP servers or to terminal server/share application clients.

Usually the alarm management systems notify the users by email or SMS/MMS. The disadvantages of such a remote alarm management are some extra costs when using SMS and MMS.

In case of modem and phone connection, for secured LAN connection, for VPN it is required to set up a specific infrastructure (e.g. proxies, firewall, protection, keys. etc.) The installation and the maintenance of the infrastructure are expensive. Moreover, technical maintenance and associated fees are in charge of the maintainer of the building.

The remote alarm management isn't flexible. No remote and unified platform is provided to manage the alarms, for example users are set only by a developer of the SCADA and supervision or the user is charged of the site may add/remove people able to manage alarms.

It isn't provided to share and create a community of maintainers or users in charge of alarm and event management. Email is a one to one connection with few possibilities to be part of a community of people needing to share information and warn the community of the alarm and event managers with emails.

A common space for users to manage the alarm and event notifications isn't provided. The users are alone and can hardly exchange and share information. It is difficult to warn other users, explain and solve their problems, request assistance etc. Furthermore, it is disadvantageous to address questions to a colleague of alarm and event management or to inform a college that all is under control.

US 2011/248857 A1 describes a s mart methane detection system for detecting presence of leakage natural gas e.g. methane gas, in residential environment.

US 2014/025321 A1 discloses an intelligent electronic device for responding to user data and information requests regarding power usage and power quality for any metered point within a power distribution system.

US 2013/134962 A1 discloses dynamic assessment of the energy sustainability of a building by comparing measurement of actual energy consumption with target energy consumption that is based at least in part on measurement of ambient conditions.

Thus, a system is proposed for remote notification of user information, e.g. of alarms and/or events, of a home or a building management system according to claim 1. Further embodiments of the present invention are indicated in the dependent claims. According to a first aspect, the innovative system for remote notification of user information of the building management system is connected via data connection to internet/intranet and at least one social network service of an internet-related community network. In this case, the social network services are services, which act as online sites to connect users of the building management system.

The building management system comprises a software module, e.g. an event and alarm module, which transfers the notification of user information created by the building management system, to at least one social network service and indicates/displays automatically at least one notification or message, e.g. an event and/or alarm notification. The information can displayed on any internet-compatible devices, like computers, mobile phones, tablets, tablet PC's, ultra books, notebooks, etc., but also every new one social network will imagine in future.

According to another aspect of the invention, a transfer of the alarms and/or events via data connection is based on an internet protocol by using a system interface and at least one service provider. The system interface is located in the building management system and the service provider is the interface to the building management system.

According to another aspect of the invention, the event and alarm module is connected via a first data channel to the system interface and the service provider is connected via a second data channel to the social network services.

According to another aspect of the invention, the system is provided in SCADA systems for buildings or in management software tools used in operational and/or maintenance mode of building management systems.

Additional, energy management software can integrate in the building management system to use the operational and/or maintenance mode of the building management system. The energy management software commit energy consumption information, e.g. the average of consumption of the building, by posting via social network to get hits regarding to the energy average of energy consumption of the building and /or a part of the building.

Advantageous by no additional remote and unified platform is provided to manage the notifications of user information, for example a maintainer of the building sets users. An authorized user of the social platform can add/ remove users in community. That can be manage by the maintainer of the building to add/remove people able to manage alarms.

According to an advantageous aspect of the inventive system it is prevented to build a specific data management infrastructure including extra costs, extra work and use the complete existing IT infrastructure, e.g. mobile connections, accounting, protection, offered by internet-related distributed community networks or social networks. In comparison to SMS/MMS there isn't needed to build up specific infrastructure, program modems or to pay for GSM connections. The system uses the regular internet/intranet connection. It isn't required to pay additional cost per call or per data exchange. Social networks can be used free of charge and there isn't need to pay extra SMS/MMS fee.

According to another advantageous aspect of the inventive system, for remote notification of user information of the building management system at least one selected user and/or group of users are provided to establish in the social network service. In the social network a platform is already integrated, which displayed automatically at least one notification or message of user information. Only an account is required to the social network.

The social network platform manages the user and/or special groups of users freely and safely. It is possible to create and/or save a history of alarm and/or event updates. These updates can be stored conveniently on profiles of selected alarm and event managers.

In a preferred embodiment of the inventive system, the social network service contains access to a virtual room including a graphic user interface to provide at least one interactive window for specialists or alarm managers to get easily access to manuals, tutorial videos, manuals, tutorial videos, etc., of a building or part of a building in the social network.

Further advantageous aspects of the inventive system are the handling of security aspects. The complete security system of a social network is used and security setups by the provider of the social network are required free of charge.

In addition, the users are able to receive instantaneously the notifications or messages in push mode on any internet-compatible devices, like computers, mobile phones, tablet PC's, ultra books, notebooks, etc., supporting access to the social network services and the notification of user information, according to add a new user and/or to notify a user, is pushed instantaneously. It isn't needed a synchronization to a server to get the notification or message of user information. That is a pure event driven mechanism.

As a special aspect of the invention, the notification of user information can send to the social network service together with a description and/or a URL link to perform the alarm and event management. Here the notification including the information is sent to the social network and the social network service dispatch and pushes this information to the community of users. The present invention relates to a method according to the wording of claim 1. Further aspects and details of the invention are set out in the dependent claims.

An exemplary embodiment of the present invention as well as advantageous refinements will be describe in more detail in conjunction with the accompanying drawing, in which:

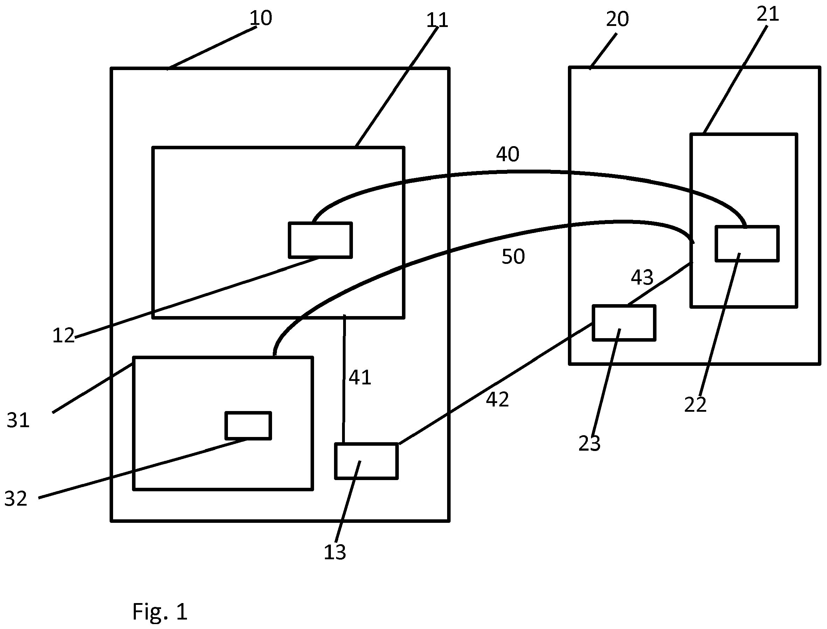

- **Fig.** 1: shows an exemplary embodiment of the innovative system, which uses a social network to notify a user or a group of users of alarms and/or events provided by a building management system.

The innovative system for remote notification of user information, e.g. of alarms and/or events, of a building management system 10 uses a social network to notify an appropriate user or an appropriate group of appropriate users, e.g. building maintainers or a maintenance community to share information. The notification of user information refers to alarms and/or events 12. In addition, technical information, string messages, energy consumption, photos or documents with regard to alarms and events 12, e.g. manuals, tutorial video of a building or a part of the building, can be user information.

The building management system 10 is provided to sending for example a tweet with messages and URL or a notification on a social network account (e.g. Facebook) and the users connect to that account get e.g. manuals, photos, videos etc. Therefore, the social network manages all that stuff.

In the exemplary embodiment, a building management system 10 is shown. The building management system 10 is provided to control all technical automation of the building, e.g. heating and cooling systems, ventilation, air conditioning systems, lighting, sun-shading systems, fire protection and safety systems, access control, Closed Circuit Television as well as sensors (air, temperature, occupancy, illumination, carbon dioxide, carbon monoxide, volatile organic compound, etc.).

The alarms and/or events 12 are created by an event and alarm module 11, which is integrated in the building management system 10. The event and alarm module 11 is executed as a software tool. The software tool uses a new software layer, which is provided to manage the notifications of the building management system 10, particularly alarms and events 12.

According to the invention, the event and the alarm module 11 can link any alarms and/or events 12 in the home or building to any social networks. The development of that link is coded thanks to the social network application program interface (API). Every social network offers its own network application program interface (API): a set of routines, protocols, and tools to building, which interacts with social network services and functions.

The event and alarm module 11 is connected with at least one social network service 21, in particular via a web connection. The event and alarm module 11 pushes information to social network service 21. The event and alarm module 11 is provided to transfer notifications of events and/or alarms 12 created by the building management system 10, to social network services 21 by using a data connection 40.

The data connection 40 comprises a first data channel 41 connecting the alarm and event module 11 with a system interface 13 (both located within the building management system) and a data interface connection 42 connecting the system interface 13 with a service provider 23 (e.g. based on internet/intranet protocol, IP). A second data channel 43 with the social network services 21 connects the service provider 23.

The building management system 10 comprises a social network browser component 31. The social network browser component 31 is also able to display a content and/or history 32 to get latest conversations and posts of social network service 21 via data connection 50 behaving the same way as connection 40.

Advantageously the social network is used to receive information, e.g. alarm and/or event notifications, delivered by the building management system 10. The idea is to prevent that a specific data management infrastructure is build, which uses the complete existing IT infrastructure, mobile connections, accounting and protection, offered by social network.

Additional, user information can also comprise energy consumption information, e.g. the average of consumption of the building or an office, air quality level, occupancy information, liquid leakage etc.

In comparison to SMS/MMS messages, it isn't required to create a specific infrastructure, program modems or to pay for mobile communication connections (GSM). The new system uses the regular internet/intranet connection; additional fees to pay per call or per data exchange are not required.

The invention can be integrated into every building and energy management software used in operational and/or maintenance mode of a building management system.

It is very simple to install the new software tool in the building management system 10 and to create one or more secure accounts for a user or a community of users in the social network.

The innovative system for remote notification of users is flexible. The social network services raise a remote and unified platform to manage the alarms and events 12 and the users and their community. For example, the developer of the SCADA can initially set users but later on supervision developer and even supervision, software isn't needed anymore to add/remove people, or to manage the alarms and events 12. Modifications and extensions of the accounts in the social network platform are easy and possible at any time over Internet.

The users can be organize into user groups. It is easy to create groups or communities to address the community or group of specific persons for alarm and event types at any time with no need of specific technical skills. For example, a heating alarm is sent to the users X, Y and Z while a cooling alarm is sent to the users A, B and Z.

The data connection 40 with the social network services 21 to notify of alarms and events 12, which is created by the building management system 10, is also provided to warn a special group of users at once available to easily push a message to each member of this group. A special network alarm and event manager can quickly address questions to other users or to the community. Such a user could ask a question to the community of alarm and event managers and response comes straight everybody is instantaneously warned and the problem can be solved in a more easy and straightforward way. It is easy to inform the alarm and event managers that a problem is solved and they can update their family with a short status update. If the alarm and event manager doesn't have a solution it is possible to ask the community and often he gets a quick response instead of pushing a message and waiting for response.

The innovative system for remote notification of user information is provided particularly to manage alarms and events 12 of a building or part of a building such as photos or videos of a building, to share this information within the community, share photos or videos, to mix with video sharing to include tutorials and also to mix with video pictures of the location where alarms and events 12 have occurred.

The system interface 13 has access to a network, such as the Internet/Intranet 20. Typically, the building management system 10 is a network-suitable device with access to the internet/intranet 20.

The social network services, for example, Facebook, Twitter, SlideShare, Linkeln, Instagram, YouTube. Google+, etc., of which the user of the building management system 10 is a member, are available via computers, mobile phones, tablet PC's, ultra books, notebooks, etc.

### Reference list

- 10: building management system
- 11: software module, event and alarm module
- 12: alarm, event created by the building management system
- 13: system interface to the internet/intranet
- 20: internet/intranet
- 21: social network services, internet-related community network (e.g. Facebook, Twitter, etc.).
- 22: user information, transmitted to the social network services (e.g. events and alarms, energy consumption), notifications and messages
- 23: interface to the system, e.g. service provider
- 30: notification, message transfer (via data canal from building management system - data interface - data channel to internet)
- 31: social network browser component
- 32: content and/or history
- 40: data connection
- 41: first data channel via alarm and event module and system interface (located internal in the building management system)
- 42: data interface connection via system interface and service provider (e.g. based on internet protocol, IP)
- 43: second data channel from the service provider to the social network service
- 50: data connection behaving the same way as data connection 40

## Claims

1. Method for remote notification of user information (12) of a home or a building management system (10), wherein a software module (11) is integrated in the home or building management system (10), wherein the software module (11) is an event and alarm module (11) which is provided to share technical information with a building maintainer or a maintenance community by using the social network service (21), said method comprising the following steps:
connecting the home or building management system (10) via data connection (40) to the internet/intranet (20),
transferring the notification of user information (12) of the building management system (10) to at least one social network service (21), wherein the notification of user information (12) is sent together with a description and/or a URL link to the social network service (21) to perform the alarm and event management,
displaying automatically the at least one notification or message (22) of user information,
using an operational and/or maintenance mode of the building management system (10) to commit energy consumption information and
posting the energy consumption information via the social network service (21) to get hits regarding to the energy average of energy consumption of the building and/or a part of the building.

2. Method according to claim 1, wherein user information consists of alarms and/or events, energy consumption, photos or documents about alarms and events, e.g. manuals, tutorial videos, of a building or part of a building.

3. Method according to any of the preceding claims, wherein a system interface (13) is located in the building management system (10), further comprising the following step:
transferring via data connection (40) based on an internet/Intranet protocol (42) by using the system interface (13) and at least one service provider (23).

4. Method according to claim 3, further comprising the following step:
connecting the event and alarm module (11) via a first data channel (41) to the system interface (13).

5. Method according to claims 3 or 4, further comprising the following step:
connecting the service provider (23) via a second data channel (43) to the social network services (21).

6. Method according to any of the preceding claims, further comprising the following step:
establishing at least one user and/or group of users in the social network service (21), which are displayed automatically at least one notification or message (22).

7. Method according to any of the preceding claims, further comprising the following step:
creating a virtual room, which has access to user information provided by the event and alarm module (11) of the building management system (10).

8. Method according to any of the preceding claims, wherein the building management system (10) comprises a social network browser component (31), further comprising the following step:
displaying a content and/or history (32) to get conversations and posts of social network service (21) via data connection (50) by the social network browser component (31).

9. Method according to any of the preceding claims, which is provided in SCADA systems for buildings or in management software tools, used in operational and/or maintenance mode of building management systems and/or home automation systems.

## Patentansprüche

1. Verfahren zur Fernmitteilung von Benutzer-Informationen (12) eines Haus- oder Gebäudeleitsystems (10), wobei ein Softwaremodul (11) in das Haus- oder Gebäudeleitsystem (10) integriert ist, wobei das Softwaremodul (11) ein Ereignis- und Alarmmodul (11) ist, welches bereitgestellt wird, um durch Verwenden des sozialen-Netzwerk-Dienstes (21) technische Informationen mit einem Gebäude-Instandhalter oder einer Wartungsgemeinschaft zu teilen, wobei das Verfahren die folgenden Schritte umfasst:
Verbinden des Haus- oder Gebäudeleitsystems (10) über Datenverbindung (40) mit dem Internet/Intranet (20),
Übertragen der Benachrichtigung von Benutzer-Informationen (12) des Gebäudeleitsystems (10) zu wenigstens einem sozialen-Netzwerk-Dienst (21), wobei die Benachrichtigung von Benutzer-Informationen (12) zusammen mit einer Beschreibung und/oder einem URL-Link an den sozialen-Netzwerk-Dienst (21) gesendet wird, um die Alarm- und Ereignisleitung durchzuführen,
automatisches Anzeigen der wenigstens einen Benachrichtigung oder Nachricht (22) von Benutzer-Informationen,
Verwenden eines Betriebs- und/oder Wartungsmodus des Gebäudeleitsystems (10), um Energieverbrauchs-Informationen festzulegen und
Veröffentlichen der Energieverbrauchs-Informationen über den sozialen-Netzwerk-Dienst (21), um Treffer in Bezug auf den Energiedurchschnitt von dem Energieverbrauch des Gebäudes und/oder eines Teils des Gebäudes zu erhalten.

2. Verfahren nach Anspruch 1, wobei die Benutzer-Informationen aus Alarmen und/oder Ereignissen, Energieverbrauch, Fotos oder Dokumenten zu Alarmen und Ereignissen, z. B. Handbüchern, Lehrvideos, eines Gebäudes oder eines Teils eines Gebäudes bestehen.

3. Verfahren nach einem der vorhergehenden Ansprüche, wobei eine Systemschnittstelle (13) in dem Gebäudeleitsystem (10) platziert ist, weiter den folgenden Schritt umfassend:
Übertragen über Datenverbindung (40) basierend auf einem Internet-/Intranet-Protokoll (42) durch Verwenden der Systemschnittstelle (13) und wenigstens eines Dienstanbieters (23).

4. Verfahren nach Anspruch 3, weiter umfassend den folgenden Schritt:
Verbinden des Ereignis- und Alarmmoduls (11) über einen ersten Datenkanal (41) mit der System-Schnittstelle (13).

5. Verfahren nach Anspruch 3 oder 4, weiter umfassend den folgenden Schritt:
Verbinden des Dienstanbieters (23) über den zweiten Datenkanal (43) mit dem sozialen-Netzwerk-Dienst (21).

6. Verfahren nach einem der vorhergehenden Ansprüche, weiter umfassend den folgenden Schritt:
Etablieren wenigstens eines Benutzers und/oder einer Gruppe von Benutzern in dem sozialen-Netzwerk-Dienst (21), für die automatisch wenigstens eine Benachrichtigung oder Nachricht (22) angezeigt werden.

7. Verfahren nach einem der vorhergehenden Ansprüche, weiter umfassend den folgenden Schritt:
Erzeugen eines virtuellen Raumes, welcher Zugriff auf von dem Ereignis- und Alarmmodul (11) des Gebäudeleitsystems (10) bereitgestellte Benutzer-Informationen hat.

8. Verfahren nach einem der vorhergehenden Ansprüche, wobei das Gebäudeleitsystem (10) eine soziale-Netzwerk-Browserkomponente (31) umfasst, weiter umfassend den folgenden Schritt:
Anzeigen eines Inhalts und/oder Verlaufs (32), um Konversationen und Veröffentlichungen des sozialen-Netzwerk-Dienstes (21) über Datenverbindung (50) von der sozialen-Netzwerk-Browserkomponente (31) zu erhalten.

9. Verfahren nach einem der vorhergehenden Ansprüche, welches in SCADA-Systemen für Gebäude oder in Verwaltungs-Software-Tools bereitgestellt ist, verwendet im Betriebs- und/oder Wartungsmodus von Gebäudeleitsystemen und/oder Heimautomatisierungssystemen.

## Revendications

1. Procédé de notification à distance d'informations d'utilisateur (12) d'un système de gestion de maison ou de bâtiment (10), dans lequel un module logiciel (11) est intégré au système de gestion de maison ou de bâtiment (10), dans lequel le module logiciel (11) est un module d'événement et d'alarme (11) qui est prévu pour partager des informations techniques avec un responsable d'entretien de bâtiment ou une communauté d'entretien par l'utilisation du service de réseaux sociaux (21), ledit procédé comprenant les étapes suivantes :
la connexion du système de gestion de maison ou de bâtiment (10) via une connexion de données (40) à l'internet/intranet (20),
le transfert de la notification d'informations d'utilisateur (12) du système de gestion de bâtiment (10) à au moins un service de réseaux sociaux (21), dans lequel la notification d'informations d'utilisateur (12) est envoyée avec une description et/ou un lien URL au service de réseaux sociaux (21) pour réaliser la gestion d'alarme et d'événement,
l'affichage automatique de l'au moins un message ou une notification (22) d'informations d'utilisateur,
l'utilisation d'un mode de fonctionnement et/ou d'entretien du système de gestion de bâtiment (10) pour fournir des informations de consommation d'énergie, et
la publication des informations de consommation d'énergie via le service de réseaux sociaux (21) pour obtenir des accès relatifs à la consommation d'énergie moyenne du bâtiment et/ou d'une partie du bâtiment.

2. Procédé selon la revendication 1, dans lequel les informations d'utilisateur sont constituées d'alarmes et/ou d'événements, d'une consommation d'énergie, de photos ou de documents relatifs à des alarmes et des événements, par exemple des manuels, des vidéos de tutoriels, d'un bâtiment ou d'une partie d'un bâtiment.

3. Procédé selon l'une quelconque des revendications précédentes, dans lequel une interface de système (13) est située dans le système de gestion de bâtiment (10), comprenant en outre l'étape suivante :
le transfert via une connexion de données (40) sur la base d'un protocole internet/intranet (42) par l'utilisation de l'interface de système (13) et d'au moins un fournisseur de services (23).

4. Procédé selon la revendication 3, comprenant en outre l'étape suivante :
la connexion du module d'événement et d'alarme (11) via un premier canal de données (41) à l'interface de système (13) .

5. Procédé selon la revendication 3 ou 4, comprenant en outre l'étape suivante :
la connexion du fournisseur de services (23) via un second canal de données (43) aux services de réseaux sociaux (21).

6. Procédé selon l'une quelconque des revendications précédentes, comprenant en outre l'étape suivante :
l'établissement d'au moins un utilisateur et/ou un groupe d'utilisateurs dans le service de réseaux sociaux (21), pour lesquels au moins un message ou une notification (22) est affiché automatiquement.

7. Procédé selon l'une quelconque des revendications précédentes, comprenant en outre l'étape suivante :
la création d'une salle virtuelle, qui a accès à des informations d'utilisateur distribuées par le module d'événement et d'alarme (11) du système de gestion de bâtiment (10).

8. Procédé selon l'une quelconque des revendications précédentes, dans lequel le système de gestion de bâtiment (10) comprend un composant de navigateur de réseaux sociaux (31), comprenant en outre l'étape suivante :
l'affichage d'un contenu et/ou d'un historique (32) pour obtenir des conversations et des publications du service de réseaux sociaux (21) via une connexion de données (50) par le composant de navigateur de réseaux sociaux (31).

9. Procédé selon l'une quelconque des revendications précédentes, qui est prévu dans des systèmes SCADA pour des bâtiments ou dans des outils logiciels de gestion, utilisés dans un mode de fonctionnement et/ou d'entretien de systèmes de gestion de bâtiment et/ou de systèmes domotiques.
